Europäisches Patentamt

European Patent Office

Office européen des brevets

(11) Veröffentlichungsnummer: **0 221 398**
A1

# (12) EUROPÄISCHE PATENTANMELDUNG

(21) Anmeldenummer: 86114081.2

(22) Anmeldetag: 10.10.86

(51) Int. Cl.⁴: **G 11 B 23/113**

(30) Priorität: 11.10.85 IT 2245385

(43) Veröffentlichungstag der Anmeldung:
13.05.87 Patentblatt 87/20

(84) Benannte Vertragsstaaten:
AT BE CH DE ES FR GB LI

(71) Anmelder: ROBOTECNICA S.r.l.
Via Clerici, 2/4
20099 Sesto San Giovani (MI)(IT)

(72) Erfinder: Bosco, Angelo
Via Kennedy, 27
I-20097 San Donato Milanese(IT)

(72) Erfinder: Magnaghi, Edgardo
Via Veneto 11/3b San Bovio
I-20068 Peschiera Borromeo(IT)

(74) Vertreter: Vogl, Leo, Dipl.-Ing.
c/o AEG Aktiengesellschaft Theodor-Stern-Kai 1
D-6000 Frankfurt am Main 70(DE)

(54) Vorrichtung zum Verbinden von fortlaufenden bandförmigen Elementen insbesondere Magnetbänder.

(57) In einer Verbindungsvorrichtung (10) für die Enden (12, 13) bandförmiger Elemente (14, 15), wird die Verbindung mittels eines Paars Rollwagen hergestellt die mit Blasund/oder Ansaugköpfen bestückt sind, und die Schnittklingen (31, 41) für eine Klebebandstreifen (23) aufweisen, der die Verbindung der bandförmigen Elemente (12, 13) bewerkstelligt.

Fig.1

EP 0 221 398 A1

ROBOTECNICA S.r.l., Via Clerici, 2/4, I-20099 Sesto San Giovani (MI) 0221398

ROB 22453

Vorrichtung zum Verbinden von fortlaufenden bandförmigen
Elementen insbesondere Magnetbänder

Die vorliegende Erfindung betrifft eine Vorrichtung zum
Verbinden von fortlaufenden bandförmigen Elementen insbesondere Magnetbänder.

Es ist bekannt, in Maschinen, in denen bandförmige Elemente
verarbeitet werden, Vorrichtungen zum Verbinden der
Folgebänder vorzusehen, wenn zum Beispiel der Anfang einer
neuen Spule mit dem Ende einer auslaufenden Spule verbunden
werden muß, um die Kontinuität der Bandzuführung zu sichern.

Eine Verbindung der beiden Bandenden wird durch die Kopf-
an-Kopf-Annäherung der Bandenden und das Anbringen und Anpressen eines Klebebandstreifens für die Verbindung bewerkstelligt. Der Klebestreifen wird durch eine rotierende Rolle von einer Spule abgespult, auf Maß geschnitten und von einem Kolben auf die zwei zu verbindenden Bandendstücke gedrückt.

Die rotierende Rolle hat ziemlich große Ausmaße und verfügt über eine Reihe von Ansaugkanälen, um das Klebeband zu halten und zu befördern, das sich so von der Spule abspult, daß es vor dem Eingriff des Kolbens in Position liegt.

Aufgabe der vorliegenden Erfindung ist es, eine Verbindungsvorrichtung zu realisieren, die gegenüber der bekannten oben beschriebenen kompakter gehalten ist, einfacher funktioniert und weniger aufwendig gebaut ist und die in jedem Fall dazu geeignet ist, bandförmige Elemente schnell und absolut sicher zu verbinden.

Dies wird gemäß der vorliegenden Erfindung durch die bei einer Verbindungsvorrichtung für fortlaufende bandförmige Elemente, die die freien und separaten Enden besagter bandförmiger Elemente mittels eines sich von einer Spule abspulenden Klebebandstreifens verbinden kann, dadurch erreicht, daß sie auf einer Trägerstruktur, seitlich in Bezug auf die Laufebene besagter bandförmiger Elemente angebracht, ein Paar bewegliche Rollwagen aufweist, wobei einer parallel zu besagter Laufebene und der andere normal in dieser Laufebene verschiebbar ist, die beide auf den ihnen zugewandten Oberflächen Ansaug- und/oder Blasknöpfe aufweisen und über ein Paar Schnittklingen für besagten Klebebandstreifen verfügen, die in der Arbeitsphase der Verschiebung eingreifen können.

Der Aufbau und die Funktion der erfindungsgemäßen Vorrichtung zum Verbinden von fortlaufenden bandförmigen
Elementen, sowie die erfindungsgemäßen Vorteile, sind an
Hand der nachfolgenden Beschreibung der beiliegenden
schematischen Zeichnungen erläutert:

Fig. 1     ist eine Frontansicht, teilweise als Schnitt,
           einer Verbindungsvorrichtung gemäß der Erfindung;

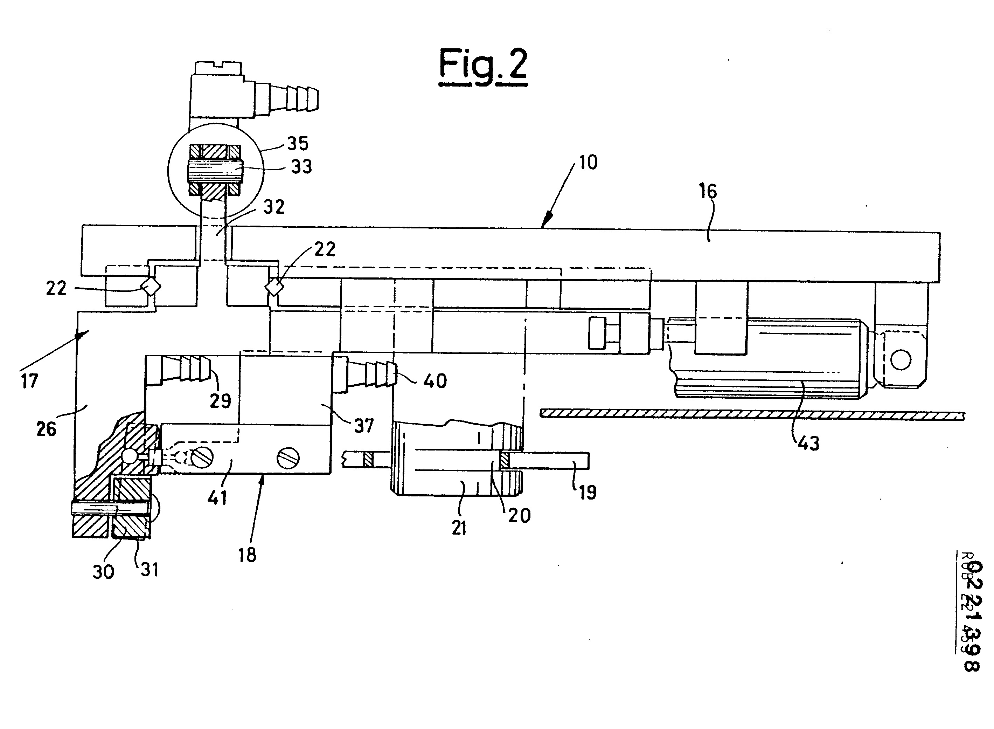

Fig. 2     ist ein teilweiser Schnitt gemäß der Linie II-II

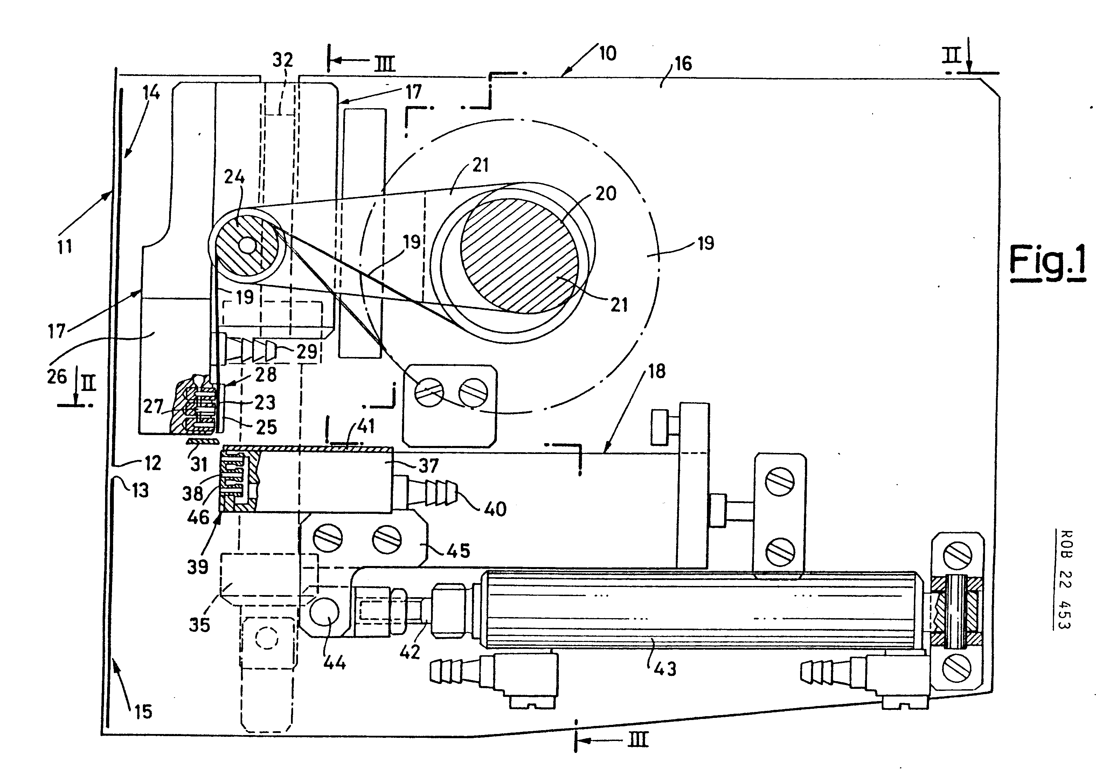

           in Fig. 1;

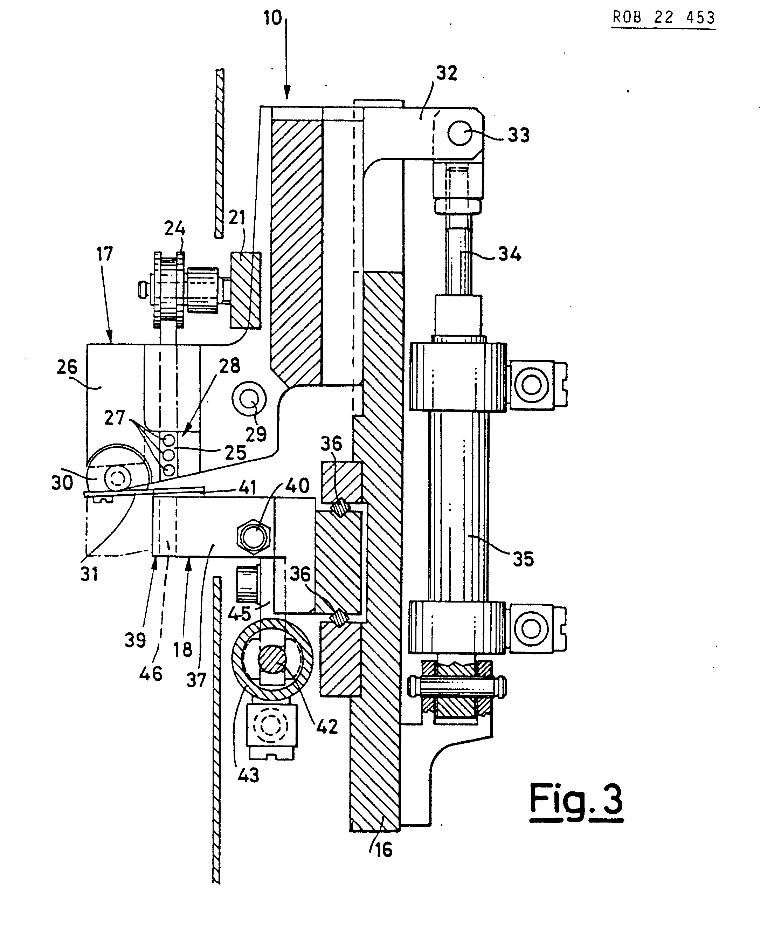

Fig. 3     ist auch ein teilweiser Schnitt gemäß der Linie
           III-III in Fig. 1.

Die in der Zeichnung dargestellte Vorrichtung ist in einer
Maschine (nicht dargestellt) für die Behandlung und Verarbeitung von bandförmigen Elementen angeordnet. Die erfindungsgemäße Verbindungsvorrichtung 10 ist als Einheit in
eine nicht dargestellte Maschine eingebaut und nach der
Laufebene 11 ausgerichtet. In derEbene 11 werden die Enden
12 und 13 der bandförmigen Elemente 14 und 15 in bekannter
Weise so zugeführt, daß sie zum Beispiel Kopf an Kopf
liegend verbunden werden können.

Die Verbindungsvorrichtung 10 besitzt eine feste Basis, die
seitlich an der Laufebene 11 liegt, auf der zwei Rollwagen
17 und 18, die das Klebeband bewegen, liegen. Das Klebeband
wird von einer Spule 19 abgewickelt, die frei rotierend in
der kreisförmigen Aussparung 20 einer Trägerspindel 21
angebracht ist, die auch auf der festen Basis 16 sitzt.
Ein erster Rollwagen 17, der auf Führungselementen 22 liegt,
ist parallel zu besagter Laufebene 11 verschiebbar.

Der Rollwagen trägt ein freies Ende 23 des Klebebandes
das von der Spule 19 kommt, und      über eine
Kehrrolle 24 geführt ist.

Die Kehrrolle 24 die das Klebeband führt, bringt
dasselbe in eine parallele Stellung zu der Oberfläche
einer an der seitlichen Oberfläche des Körpers 26 des
ersten Rollwagens 17 eingelassenen Führung 25, wo sich
eine Reihe von untereinander verbundenen Löchern
befinden, die einen ersten Ansaug- und/oder Blaskopf
28 darstellen, der von einer Druckluftanlage 29 durch
Kanäle (nicht dargestellt) gespeist wird und Mittel
besitzt, um die Funktion von Ansaugen und Blasen zu ändern.
Ein beweglich aufgehängter und kippbarer Träger, der
am Ende des Kopfes 28 auf dem ersten Wagen verbolzt
ist, trägt eine erste Klinge 31, die aus dem Körper
des ersten Rollwagens heraussteht, und die sich
parallel zur Laufebene 11 und mit dem Schnittfaden
auf der Laufebene selbst befindet.

Ein Bügel 32 erstreckt sich vom Körper 26 des ersten
Rollwagens 17 aus und ist in 33 mit dem Ende eines
Schafts 34 eines Zylinders 35 verbolzt, der die
Verschiebung des ersten Rollwagens im Arbeitsablauf
bewerkstelligt.

Ein zweiter Rollwagen 18 ist auf seinen Führungen 36
in normaler Laufrichtung 11 verschiebbar, wobei er, immer in Bewegung längs der Laufebene, indem er ein freies Ende des Klebebands trägt, zum Arbeitsablauf beiträgt.

Eine seitliche Oberfläche 46 des Körpers 37 des zweiten Rollwagens 18, die der Ebene des Klebebands zugewandt ist, verfügt auch über eine Reihe untereinander verbundener Löcher 38, die einen zweiten Ansaug-Blaskopf 39 darstellen, in 40 durch Druckluft gespeist, der im Wesentlichen wie der erste Kopf 28 aufgebaut ist.

Seitlich am Körper des zweiten Rollwagens 18, in der Ebene der normalen Laufrichtung, liegt eine zweite Klinge 41, die mit der ersten Klinge 31 beim Schnitt des Klebebands zusammenwirkt.

Die Bewegung des Wagens 18 wird durch den Schaft 42 eines Zylinders 43 gesteuert, der an der Basis 16 befestigt ist, und in 44 mit dem Ende des Schafts 42 eines Bügels 45, der vom zweiten Wagen 18 ausgeht, verbolzt ist.

Eine Verbindungsvorrichtung gemäß der vorliegenden Erfindung ist zum Beispiel für automatische Maschinen für das Laden von Magnetband auf Kassette geeignet und kann vorteilhaft in allen Phasen der Verbindung und Anheftung zweier Bandenden benutzt werden.

Die Spule 19 des Klebebandes ist auf der Trägerspindel 21 angeordnet u. das freie Ende 23 des Bandes auf die Höhe der Löcher 27 des ersten Kopfs 28 geführt.

Die Vorrichtung kann dann mit dem automatisch ablaufenden Verbinden beginnen.

Das freie Ende 23 des Klebebandes wird von den Löchern 27 auf dem ersten Kopf 28 angesaugt und somit festgehalten, und mittels der Verschiebung des ersten Wagens 17, der vom Zylinder 35 gesteuert wird, wird das Band zum zweiten an der Seite des zweiten Wagens angebrachten Ansaugkopf 39 geführt, wobei die exakte Stellung durch die Oberfläche der Führung 25 gewährleistet wird, die das Band hält (gestrichelte und gepunktete Linie in Abb.3).

An diesem Punkt saugen die Löcher 38 Luft an, während die Löcher 27 so Luft ausblasen, daß das freie Bandende 23 auf den zweiten Kopf 39 vorläuft, wo es fest sitzenbleibt.

Der erste Wagen 17 kehrt in seine Ausgangsstellung zurück, und erst dann saugen die Löcher 27 das Klebeband wieder an. Der zweite Wagen 18 bewegt sich nun zu der Laufebene 11 des Zylinders 43.

und bewirkt den Einsatz der zwei Klingen 31 und 41 und den folgenden Schnitt des Bandstreifens 23, der so in Kontakt mit den beiden Enden 12 und 13 der Bänder 14 und 15, die miteinander verbunden werden sollen, gebracht wird.

Anschließend hört der Kopf 39 mit dem Ansaugen auf und bläst stattdessen, so daß der Klebebandstreifen 23, der nun auf den Bandenden 12 und 13 sitzt, losgelassen wird. Der Kopf kehrt in die Ausgangsstellung zurück (Fig. 1).

Die freie Verbindung der zwei Köpfe 28 und 39 erlauben die Zuführung des Klebebandes und die Anbringung an den Enden der Bänder oder bandförmigen Elementen, die in einfacher Weise verbunden werden sollen. Die Möglichkeit des Ansaugens und Anblasens und damit Druck und Unterdruck in den verschiedenen Arbeitsabläufen wird vorteilhaft ausgenutzt.

ROB 22 453                    - 8 -

Ansprüche

1.  Vorrichtung zum Verbinden von fortlaufenden bandförmigen Elementen insbesondere Magnetbänder mittels eines
    Klebebandstreifens, der von einer Spule abgewickelt
    wird, dadurch gekennzeichnet, daß sie ein Trägergestell
    aufweist, an dem seitlich in Bezug auf die Laufebene
    der bandförmigen Elemente zwei verschiebbare Rollwagen
    angebracht sind, deren einer sich parallel zur Laufebene und der andere sich normal in dieser Laufebene
    bewegt, die beide mit Ansaug- und/oder Anblasköpfen
    bestückt sind, die einander zugewandt sind, und die
    weiterhin über ein Paar Klingen verfügen, die sich in
    einer bestimmten Arbeitsphase einschalten können.

2.  Vorrichtung gemäß Anspruch 1, dadurch gekennzeichnet,
    daß die zugewandten Oberflächen, die mit Ansaug-
    und/oder Anblasköpfen bestückt sind, auf den Körpern
    der Rollwagen parallel zur Laufebene angebracht sind
    und daß an der Oberfläche jedes der beiden Rollwagen
    ein Ende des Klebebandstreifens gehalten wird, der sich
    von der Spule abspult, die auf einer auf dem Gehäuse
    liegenden Spindel ruht, wobei eine Kehrrolle zwischengeschaltet ist.

3.  Vorrichtung gemäß Anspruch 1 oder 2, dadurch gekennzeichnet, daß das Paar Schnittklingen aus einer ersten
    besteht, die freibeweglich auf einem der Wagen sitzt
    und normal in dieser Laufebene schneidet, und deren Körper parallel zu dieser Laufebene selbst liegt, die zweite am anderen Wagen befestigt ist und komplementär zur ersten Klinge schneidet, aber mit ihrem Körper normal in der Laufebene liegend.

4. Vorrichtung nach Anspruch 1 oder folgender, dadurch gekennzeichnet, daß beide Wagen auf Führungen, auf dem Gehäuse liegen und durch Zylinder gesteuert verschiebbar sind.

5. Vorrichtung nach Anspruch 1 oder folgender, dadurch gekennzeichnet, daß die Ansaug- und/oder Anblasköpfe eine Reihe von Löchern aufweisen, die untereinander verbunden sind und an eine Druckluftanlage angeschlossen sind.

6. Vorrichtung nach Anspruch 2 oder folgender, dadurch gekennzeichnet, daß die Trägerspindel der Klebebandspule eine radiale Queraussparung für den Sitz derselben aufweist.

7. Vorrichtung nach Anspruch 1 oder folgender, dadurch gekennzeichnet, daß einer der beiden Wagen über eine hohle Führung, in der der Ansaug- und/oder Anblaskopf liegt, verfügt und daß die Grundposition des einen Wagens auf der Führung, die am Gehäuse angebracht ist, mit der Position des darüberliegenden anderen Wagens übereinstimmt.

Fig.1

ROB 22 453

0221398

**Fig.2**

0221398

ROB 22 453

**Fig.3**

0221398

Europäisches
Patentamt

EUROPÄISCHER RECHERCHENBERICHT

Nummer der Anmeldung

EP 86 11 4081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 112 748 (AWA ENGINEERING CO.)<br>* Ansprüche 1, 2; Figuren 5-17 * | 1 | G 11 B 23/113 |
| A | US-A-4 204 898 (J.L. KING)<br>* Spalte 2, Zeile 55 - Spalte 4, Zeile 24; Figuren 1, 2 * | 1 | |
| A | US-A-4 062 719 (S. MASUZIMA et al.)<br>* Spalte 10, Zeile 40 - Spale 11, Zeile 62; Figuren 7, 8a, 8b * | 1 | |
| A | US-A-4 328 066 (S. KIUCHI et al.)<br>* Figuren 1, 2 * | | |
| A | US-A-4 462 858 (L.J. GOGUEN et al.)<br>----- | | RECHERCHIERTE SACHGEBIETE (Int. Cl. 4)<br><br>G 11 B 15/66<br>G 11 B 23/00<br>G 11 B 27/06<br>B 65 H 19/00<br>B 65 H 21/00 |

Der vorliegende Recherchenbericht wurde für alle Patentansprüche erstellt

| Recherchenort | Abschlußdatum der Recherche | Prüfer |
|---|---|---|
| BERLIN | 09-01-1987 | ROGNONI M.G.L. |